# EUROPÄISCHE PATENTSCHRIFT

(11) **EP 1 854 251 B1**
(45) Veröffentlichungstag und Bekanntmachung des Hinweises auf die Patenterteilung: **20.11.2013**
(21) Anmeldenummer: 06707239.7
(22) Anmeldetag: 24.02.2006
(51) Int. Cl.: H04L 12/40

(54) **FELDBUSSYSTEM ZUR DRAHTLOSEN KOMMUNIKATION**
FIELD BUS SYSTEM FOR WIRELESS COMMUNICATION
SYSTEME DE BUS DE TERRAIN POUR LA COMMUNICATION SANS FIL

(30) Priorität: 24.02.2005 DE 102005008488; 24.02.2005 US 656463 P
(43) Veröffentlichungstag der Anmeldung: 14.11.2007
(73) Patentinhaber: VEGA Grieshaber KG, 77709 Wolfach (DE)
(72) Erfinder: ISENMANN, Andreas, 77716 Haslach (DE); FAIST, Fridolin, 77709 Oberwolfach (DE); SCHÄTZLE, Ralf, 77716 Fischerbach (DE)
(74) Vertreter: Kopf, Korbinian Paul
(86) Internationale Anmeldenummer: PCT/EP2006/001696
(87) Internationale Veröffentlichungsnummer: WO 2006/089760

(56) Entgegenhaltungen:
- EP-A- 1 211 582
- DE-A1- 10 161 735
- DE-A1- 10 216 331

## Beschreibung

Die vorliegende Erfindung betrifft ein Datenübertragungssystem. Insbesondere betrifft die vorliegende Erfindung ein Datenübertragungssystem zur drahtlosen Kommunikation, eine Steuereinrichtung zur drahtlosen Kommunikation mit einem Feldgerät, eine Sende-Empfangseinrichtung und ein Verfahren zur drahtlosen Kommunikation in einem Datenübertragungssystem.

Ein Bussystem teilt sich ein gemeinsames Medium, um mehrere Geräte miteinander zu verbinden. Da alle Geräte an einem Bus angebunden sind, wird es ermöglicht, dass an einem Bussystem die Kommunikation eines jeden Endgeräts mit jedem anderen möglich ist, ohne jedes Gerät mit jedem einzeln verbinden zu müssen. Um beispielsweise jedes von N Endgeräten mit jedem anderen verbinden zu können, sind mit einer Sternverlcabelung (N-1)xNx½ Verbindungen, insbesondere Kabel, nötig.

Mit der Anzahl der Geräte, die verbunden werden sollen, steigt die Anzahl der Verbindungen, beispielsweise der Kabel, exponentiell an. Ein Bussystem kann diese hohe Anzahl von Verbindungen durch einen einzigen Bus, an dem alle Geräte angeschlossen sind, ersetzen.

Im Umfeld der Mess- und Regeltechnik, wie auch der prozessverarbeitenden Systeme, wo Sensoren bzw. Aktoren an eine Steuerung oder an ein Analysesystem angebunden sind, werden heute verstärkt digitalkommunizierende Geräte eingesetzt. Für die Kommunikation dieser Geräte untereinander kommen hierbei Feldbusse, wie HART@, Profibus oder Fieldbus Foundation, zum Einsatz.

Die Verdrahtung der beteiligten Geräte gestaltet sich hierbei unter Umständen schwierig, wenn z. B. Hindernisse, wie Flussläufe oder ähnliches, zu überwinden sind. Auch ist eine vorhandene Verdrahtung nur schwer änderbar und eine notwendige Erweiterung kann Probleme bereiten. Die Verdrahtung kann bei komplizierten geografischen Strukturen oder weit auseinanderliegenden Messgeräten aufwendig und teuer werden. Außerdem ist eine Verdrahtung nicht sehr flexibel im Fall von Änderungen.

Ein Ethernet-System (ein sehr weit verbreitetes Protokoll für ein LAN) ist ein Bussystem, an dem mehrere Teilnehmer angeschlossen werden können. D. h. die Geräte bedienen sich eines gemeinsamen Mediums. Spezielle Protokolle der IEEE 802.X Familie regeln den Zugriff auf den Bus. Mit der IEEE 802.11 Protokollfamilie wurde als sog. WLAN als gemeinsames Medium anstelle eines Busses die Luft eingeführt. Alle Geräte, die sich in der Funkreichweite eines Senders befinden, empfangen gleichfalls, als wären sie am selben Bus angeschlossen, die Signale des Senders. Dadurch wird in dem sog. Infrastrukturmodus oder in dem Adhoc-Modus eine drahtlose Kommunikation möglich.

Für die drahtgebundene Kommunikation mittels dieser Protokolle können Steuergeräte bzw. Messauswertgeräte und abgesetzte Sensoren bzw. Feldgeräte, miteinander kommunizieren. Dabei liefern die Sensoren bzw. Feldgeräte die Messwerte, die von den Steuergeräten ausgewertet werden. Die für die drahtgebundene Kommunikation benötigte Verschaltung ist aufwendig und teuer und außerdem nicht flexibel.

Die internationale Patentschrift WO 03/023536 A1 gibt ein Funkmodul für ein Feldgerät an, mit dem Feldgeräte, die keine integrierte Funkeinrichtung aufweisen, einfach und kostengünstig per Funk bedient werden können.

Funkübertagungstechnologien wie WLAN oder Bluetooth, nutzen das sog. ISM (Industrial, Scientific and Medical Band) Band zur Übertragung von Daten. Das ISM Band kann lizenzfrei für industrielle, wissenschaftliche oder medizinische Anwendungen genutzt werden. Das 2,4 GHz Band ist dabei weltweit für industrielle, wissenschaftliche oder medizinische Anwendungen freigegeben. Dieses Band können aber auch z.B. schnurlose Telefone oder Babyfons verwenden. Es müssen zwar Auflagen bezüglich Sendeleistung und Störung benachbarter Frequenzbereiche eingehalten werden, jedoch kann es innerhalb des freien ISM Bandes zu Übertragungsstörungen der vielen in diesem Band operierenden Geräte kommen. Diese Störungen können es unter Umständen nötig machen, übertragene Informationen zu wiederholen. Somit kann es zu Verzögerungen bei der Übertragung kommen.

EP 1 211 582 A1 betrifft eine Anordnung zur Überwachung, Steuerung und Regelung einer betriebstechnischen Anlage eines Gebäudes, bei der Kommunikationsmittel zur Bedienung von Ein-/Ausgabemodulen für Feldgeräte vorgesehen sind. Bei den Kommunikationsmitteln handelt es sich um einen Feldbus oder um drahtlose Kommunikationskanäle.

DE 101 61 735 A1 betrifft ein Verfahren zur Kopplung eines drahtlosen Funk-Segments an ein verdrahtetes PROFIBUS-Segment mittels eines speziellen Kopplungselements, wobei auf dem kabelbasierten Segment das unveränderte Profibus-Mediumzugriffsprotokoll genutzt wird, während auf dem drahtlosen Segment ein zentralgesteuertes, nicht-token-passing basiertes Mediumzugriffsprotokoll benutzt wird.

Es ist eine Aufgabe der vorliegenden Erfindung, ein einfaches Datenübertragungssystem zur drahtlosen Kommunikation anzugeben.

Diese Aufgabe wird durch ein Datenübertragungssystem zur drahtlosen Kommunikation, eine Steuereinrichtung zur drahtlosen Kommunikation mit einem Feldgerät, einer Sende-Empfangseinrichtung und einem Verfahren zur drahtlosen Kommunikation in einem Datenübertragungssystem gelöst.

Gemäß einem Ausführungsbeispiel der vorliegenden Erfindung wird ein Datenübertragungssystem zur drahtlosen Kommunikation, umfassend eine Steuereinrichtung, ein Feldgerät und eine Funkübertragungseinrichtung angegeben.

Die Steuereinrichtung ist ausgebildet, mit der Funkübertragungseinrichtung über ein Feldbus-Protokoll zu kommunizieren, wobei das Feldgerät ausgebildet ist, mit der Funkübertragungseinrichtung über das Feldbus-Protokoll zu kommunizieren. Die Funkübertragungseinrichtung ist ausgebildet, das Feldbus-Protokoll mittels eines Funk-Protokolls zu übertragen.

Gemäß einem weiteren Ausführungsbeispiel der vorliegenden Erfindung wird eine Steuereinrichtung zur drahtlosen Kommunikation mit einem Feldgerät, umfassend eine Feldbusumsetzungseinrichtung und eine Timeout-Anpassungseinrichtung angegeben. Die Feldbusumsetzungseinrichtung ist ausgebildet, ein Steuersignal in ein Feldbussignal umzusetzen, wobei die Timeout-Anpassungseinrichtung ausgebildet ist, ein Zeitverhalten der Feldbusumsetzungseinrichtung einzustellen.

Gemäß einem weiteren Ausführungsbeispiel der vorliegenden Erfindung wird eine Sende-Empfangseinrichtung angegeben, die eine Sendeeinrichtung und eine Empfangseinrichtung umfasst. Die Sendeeinrichtung ist ausgebildet, ein Feldbus-Protokoll in ein Funk-Protokoll umzusetzen und zu senden und die Empfangseinrichtung ist ausgebildet, das Funk-Protokoll in das Feldbus-Protokoll umzusetzen und zu empfangen.

Gemäß noch einem anderen Ausführungsbeispiel der vorliegenden Erfindung wird ein Verfahren zur drahtlosen Kommunikation in einem Datenübertragungssystem angegeben. Das Datenübertragungssystem umfasst eine Steuereinrichtung, ein Feldgerät und eine Funkübertragungseinrichtung. Dabei umfasst das Verfahren die Schritte: Kommunizieren der Steuereinrichtung mit der Funkübertragungseinrichtung mittels eines Feldbus-Protokolls, Übertragen des Feldbus-Protokolls mittels eines Funk-Protokolls und Kommunizieren der Funkübertragungseinrichtung mit dem Feldgerät mittels des Feldbus-Protokolls.

Heutzutage wird in der Mess-, Steuer- und Regeltechnik ein Feldbus-Protokoll zur Übertragung von Mess-, Steuer- oder Regeldaten eingesetzt. Mittels eines Feldbus-Protokolls können eine Steuereinrichtung und ein Feldgerät über einen Bus miteinander kommunizieren. Es kann beispielsweise eine Steuereinrichtung, die der Anzeige von Messdaten und der Auswertung von Messdaten dienen kann, ein Feldgerät auffordern, einen Messwert bereitzustellen. Das Feldgerät umfasst meist einen Sensor, der beispielsweise Messwerte erfasst und an die Steuereinrichtung mittels Feldbsprotokoll senden kann. Bei einem Feldgerät kann es sich jedoch auch um einen Aktor einer Steuer- oder Regeleinrichtung handeln, der nach Vorgaben der Steuereinrichtung angesteuert werden kann.

Ein Feldbus-Protokoll umfasst mehrere Kommandos, die standardisiert sind. Durch Aufrufen eines der Kommandos wird eine dem Protokoll entsprechende Signalsequenz auf dem angeschlossenen Bus, insbesondere einem Feldbus, ausgegeben. Diese Feldbussignalsequenz kann von dem angesprochenen Gerät empfangen und ausgewertet werden. Dieses angesprochene Gerät kann selbst vorgegebene Aktionen ausführen und beispielsweise Messwerte an die Steuereinheit über den Bus zurückliefern.

Ein Bus, insbesondere ein Bussystem, kann eine physikalische Verbindung oder ein Kabel sein. Beispielsweise kann ein Bus ein geschirmtes Twisted Pair Kabel sein. An einem Bus können beliebig viele Geräte angeschlossen werden, um untereinander Daten auszutauschen. Mittels einer Adressierung kann ein individuelles Gerät direkt adressiert werden.

Durch die Verwendung einer Funkübertragungseinrichtung ist es möglich, dass eine Steuereinrichtung über das gemeinsame Feldbus-Protokoll mit der Funkübertragungseinrichtung kommuniziert. Der Steuereinrichtung kann die Funkübertragungseinrichtung transparent erscheinen. In anderen Worten bedeutet das, dass für die Steuereinrichtung, ein Feldgerät oder ein anderes buskonformes Gerät den Anschein hat, dass ein standardlconformer Bus, insbesondere ein standardkonformes Kabel, angeschlossen ist.

Erfindungsgemäß wird ein Datenübertragungssystem für die drahtlose Kommunikation im Umfeld der Mess- und Regeltechnik bereitgestellt. Der erfindungsgemäße Einsatz einer drahtlosen Kommunikation vereinfacht die Verbindung der Messgeräte untereinander.

Die Funkübertragungseinrichtung kann von der Steuereinrichtung Signale, die dem Feldbus-Protokoll entsprechen, empfangen. Diese Signale kann die Funkübertragungseinrichtung in entsprechende Signale eines Funk-Protokolls umsetzen. Diese Umsetzung kann auf einer beliebigen Schicht, beispielsweise eines OSI-Kommunikations-Protokolls stattfinden. Beispielsweise können physikalische Feldbussignale in physikalische Funkübertragungssignale umgesetzt werden. Die Funkübertragungseinrichtung entspricht daher einem Gateway in einem Kommunikationsnetz.

Das Feldgerät ist ebenfalls mit der Funkübertragungseinrichtung über einen Feldbus gekoppelt. Über diesen Feldbus unterhält sich das Feldgerät mit der Funkübertragungseinrichtung über das Feldbus-Protokoll. Die Funkübertragungseinrichtung ist ausgebildet, um Signale des Funk-Protokolls in Signale des Feldbus-Protokolls umzusetzen. In anderen Worten kann eine Verbindung zwischen Steuergerät und Feldgerät über einen Feldbus von einer Funkübertragungseinrichtung physikalisch unterbrochen und dadurch in der Reichweite verlängert werden. Vorteilhaft ist damit eine große Entfernung zu überbrücken, ohne dass eine Verkabelung bzw. der Bus geändert werden muss.

Die Funkübertragungseinrichtung unterhält sich sowohl mit dem Steuergerät als auch mit dem Feldgerät über das Feldbus-Protokoll. Die Funkübertragungseinrichtung ist sowohl mit dem Feldgerät als auch mit dem Steuergerät über einen Feldbus gekoppelt. Bei der Kommunikation zwischen Steuergerät und Feldgerät erscheint die Funkübertragungseinrichtung transparent. Eine Kommunikation kann sowohl vom Steuergerät über die Funkübertragungseinrichtung zum Feldgerät stattfinden. Genauso kann eine Kommunikation vom Feldgerät über die Funkübertragungseinrichtung zur Steuereinrichtung stattfinden.

Eine bidirektionale Kommunikation in zwei Richtungen ist mittels der Funkübertragwlgseinrichtung möglich. Beispielsweise kann die Steuereinrichtung ein Aufforderungssignal entsprechend eines Feldbus-Protokolls an das Feldgerät übermitteln. Auf dieses Anforderungssignal kann das Feldgerät mit einem bestimmten oder ermittelten Messwert dem Steuergerät über das Feldbus-Protokoll ein Antwortsignal zur Verfügung stellen. So kann beispielsweise das Feldgerät, das ein beliebiger Messsensor sein kann, aufgefordert werden, eine Messung durchzuführen und den ermittelten Messwert dem Steuergerät zur Verfügung zu stellen.

Aufgrund der Transparenz der Funkübertragungseinrichtung gegenüber einem Feldbus-Protokoll ist es möglich, Standardgeräte einzusetzen. Das bedeutet, Geräte, die zur Kommunikation ein standardisiertes Feldbus-Protokoll verwenden, können sich über die Funkübertragungseinrichtung unterhalten.

Beispielsweise kann eine Reichweite eines Feldbussystems durch den Einsatz von Repeatern verlängert werden. Das bedeutet, dass beispielsweise Funkübertragungseinrichtungen Verstärkungselemente aufweisen können, die als Relaisstationen dienen können und somit die Reichweite des Busses erweitern können. Vorteilhaft können durch den Einsatz einer Funktechnologie Hindernisse, wie beispielsweise Flussläufe, überwunden werden. Dadurch können Feldgeräte auch an geografisch ungünstigen Orten zum Einsatz kommen.

Mittels der Funktechnologie ist es gleichfalls möglich, Feldgeräte in mobilen Einsatzszenarien einzusetzen. Die Ortsgebundenheit eines Feldgerätes, beispielsweise eines Messsensors, wird durch den Einsatz einer Funkübertragungseinrichtung aufgehoben. Daher können beispielsweise Messungen auch an beweglichen Objekten, wie beispielsweise Fahrzeugen, durchgeführt werden.

Gemäß einem weiteren Ausführungsbeispiel der vorliegenden Erfindung wird ein Datenübertragungssystem angegeben, bei dem das Feldbus-Protokoll ein Protokoll ausgewählt aus der Gruppe der Feldbus-Protokolle HART®, Profibus und Fieldbus Foundation sein kann. Die Verwendung der spezifischen Feldbus-Protokolle HART®, Profibus oder Fieldbus Foundation ermöglicht es, das Datenübertragungssystem im Zusammenhang mit heute gängigen Steuer- bzw. Feldgeräten zu verwenden. Wird einer der Standards in der Funkübertragseinrichtung implementiert, so kann die Funkübertragungseinrichtung transparent für das entsprechende Feldbus-Protokoll HART@, Profibus oder Fieldbus Foundation sein.

Wenn die Protokollumsetzung des entsprechenden Feldbus-Protokolls auf das entsprechende Funk-Protokoll in der Funkübertragungseinrichtung implementiert ist, lassen sich leicht Messgeräte bzw. Steuergeräte des entsprechenden Standards mittels einer Funkübertragungseinrichtung verbinden. Ein physikalischer geschlossener Bus kann somit entfallen. Ein geschlossener Bus bedeutet in diesem Zusammenhang, dass eine durchgehende physikalische Verbindung zwischen den einzelnen Geräten am Bus über ein entsprechendes Buskabel vorhanden ist.

Gemäß einem weiteren Ausführungsbeispiel der vorliegenden Erfindung wird ein Datenübertragungssystem angegeben, bei dem ein Timeout-Verhalten des HART®-Protokolls in der Steuereinrichtung an die Funksignalübertragung angepasst ist. Gemäß der HART®-Spezifikation kann ein Master bzw. eine Steuereinrichtung, ein Feldgerät oder Slave anfragen, um Messwerte bereitgestellt zu bekommen. Auf die Anfrage eines Masters sollte gemäß der HART®-Spezifikation eine Antwort eines Slaves innerhalb von 256 ms vorliegen.

Aufgrund von Protokollunsetzungsmaßnahmen in der Funkübertragungseinrichtung kann es jedoch zu verlängerten Signallaufzeiten kommen. In anderen Worten bedeutet das, dass in der Funkübertragungseinrichtung ein HART®-Protokoll in ein Funk-Protokoll umgesetzt werden muss. Beispielsweise kann es sein, dass Overhead-Informationen, wie Checksummen oder Rahmeninformationen, angefügt werden müssen um ein Funk-Protokoll-Paket zu erzeugen. Dadurch kann ein Overhead erzeugt werden, der zu einer zusätzlichen Verzögerung zu der Signallaufzeit führen kann.

Entsprechende Verzögerungen können bei dem Auspacken der Signale entstehen. Das Auspacken kann nötig sein, um Funksignale in Feldbussignale zurückzuwandeln. Sowohl beim Senden der Anfrage als auch beim Senden eines Antwortsignals eines Slaves an den Master kann jeweils ein Ein- und Auspackvorgang nötig sein. Somit kann ein Antwortsignal eines Slaves auf eine Masteranfrage länger als 256 ms dauern. Eine zusätzliche Latenzzeit kann durch Anpassen eines Timeout-Verhaltens in dem Steuer- bzw. Auswertgerät gegenüber dem HART®-Standard berücksichtigt werden.

Vorteilhaft kann durch eine Vergrößerung des Timeout-Verhaltens gegenüber dem HART®-Standard eine längere Reichweite eines Funksignals erzielt werden. Es könnte damit berücksichtigt werden, dass zur Funkübertragung mehrere Repeaterstationen eingesetzt werden können. Beispielsweise können Repeaterstationen das Funksignal empfangen, verstärken und erneut über eine Funkstrecke ausgeben. Dadurch kann sich zusätzlich eine Latenzzeit durch zusätzliches Ein- und Auspacken verlängern. Außerdem kann sich ein entsprechendes Antwortverhalten eines Feldgeräts auf eine Anfrage eines Masters verlängern. Mittels eines nach 256 ms oder mehr als 256 ms ablaufenden Timers kann dieses zusätzliche Zeitverhalten berücksichtigt werden.

Gemäß einem weiteren Ausrührungsbeispiel der vorliegenden Erfindung wird ein Datenübertragungssystem angegeben, bei dem das Funk-Protokoll ein Protokoll ausgewählt aus der Gruppe der Funk-Protokolle WLAN, Bluetooth und Zigbee ist. Vorteilhaft handelt es sich bei Wireless LAN, Bluetooth und Zigbee um standardisierte Funk-Protokolle. Daher kann die Implementierung dieser Standards zur Umsetzung eines Feldbus-Protokolls in das entsprechende Funk-Protokoll erleichtert werden, da keine Neuentwicklung eines Funkübertragungsprotokolls nötig ist.

Vorteilhaft kann jedoch auch ein proprietäres Funk-Protokoll verwendet werden. Ein proprietäres Funkprotokoll ist ein Funkprotokoll, das sich zumindest teilweise von einem standardisierten Funkprotokoll unterscheidet. Mittels eines proprietären Funk-Protokolls kann erreicht werden, dass eine Reichweite des Funkübertragungssystems bei Einsatz eines Rundstrahlers gemäß einem europäischen Standard 500 m bzw. gemäß einem amerikanischen Standard 1600 m betragen kann. Es können außerdem besondere Anforderungen zur Übertragung eines HART® - Funkpakets berücksichtigt werden.

Die Reichweite eines Funkübertragungssystems kann auch durch den Einsatz von besonders gestalteten Antennen, wie Richtantennen weiter erhöht werden. Vorteilhaft können durch den Einsatz eines proprietären Funkübertragungsprotokolls Besonderheiten bei dem Einpacken von Feldbussignalen in Funksignale berücksichtigt werden. Der Grund für den Einsatz eines proprietären Protokolls kann eine höhere Reichweite sein als es der Einsatz von WLAN, Bluetooth oder Zigbee erlaubt.

Gemäß einem weiteren Ausführungsbeispiel der vorliegenden Erfindung wird ein Datenübertragungssystem angegeben, bei dem die Funkübertragungseinrichtung ausgebildet ist, ein Analogsignal an die Steuereinrichtung zu übertragen. Vorteilhaft lassen sich Analogsignale, wie beispielsweise ein 4...20mA-Signal über die Funkübertragungseinrichtung übertragen. Dazu kann das Analogsignal digitalisiert werden und in ein, dem HART®-Protokoll entsprechendes Signal gewandelt werden. Da die Funkübertragungseinrichtung für die Übertragung eines HART®-Protokolls über ein Funk-Protokoll ausgebildet ist, lassen sich somit auch analoge Signale über die Funkschnittstelle übertragen. Das Analogsignal kann auch nach einer anderen Umsetzungsvorschrift in ein Funkprotokoll gewandelt werden.

Gemäß einem weiteren Ausführungsbeispiel der vorliegenden Erfindung wird ein Datenübertragungssystem angegeben, bei dem die Funkübertragungseinrichtung ausgebildet ist, ein Schaltsignal an die Steuereinrichtung zu übertragen. Vorteilhaft lassen sich somit Sensoren, beispielsweise Schalter, die ein Schaltsignal erzeugen, direkt an die Funkübertragungseinrichtung anschließen. Gleichfalls, wie bei dem Einsatz von Analogsignalen, ist kein eigenes Feldgerät nötig, um ein Analogsignal bzw. ein Schaltsignal abzufragen. Durch den direkten Anschluss eines Analogsignals bzw. Schaltsignals an die Funkübertragungseinrichtung können somit Kosten gespart werden.

Ein Analogsignal kann beispielsweise ein Füllstandssignal sein. Das bedeutet, dass ein Füllstand einem Strombereich von 4 bis 20 mA, beispielsweise linear, zugeordnet werden kann. Es kann beispielsweise ein leerer Füllstand einem Signal von 4 mA entsprechen und ein voller Füllstand einem Signal von 20 mA. Dazwischen können beliebige analoge Stromwerte bereitgestellt werden, die entsprechenden Füllständen entsprechen.

Gemäß einem weiteren Ausführungsbeispiel der vorliegenden Erfindung umfasst die Funkübertragungseinrichtung weiter eine Speichereinrichtung, wobei die Speichereinrichtung ausgebildet ist, eine von dem Feldgerät bereitgestellte Information zu speichern. Die Speichereinrichtung ist ausgebildet, bei Bedarf die gespeicherte Information an die Steuereinrichtung bereitzustellen. Es kann somit im Feld eine Kommunikation zwischen Funkübertragungscinrichtung und Feldgerät stattfinden, ohne dass eine Messung von der Steuereinrichtung angefordert worden ist.

D. h. in der Speichereinrichtung der Funkübertragungseinrichtung können Messwerte, die kontinuierlich von dem Feldgerät geliefert werden oder von der Funkübertragungseinrichtung regelmäßig gepollt werden, abgespeichert werden. Erfolgt eine Anfrage einer Steuereinrichtung an ein Feldgerät, so muss die Anfrage nicht an das Feldgerät weitergegeben werden, sondern die Anfrage des Steuergerätes kann direkt von der Funkübertragungseinrichtung mit Werten aus dem Speicher beantwortet werden.

Eine Funkübertragungseinrichtung kann zwei Seiten aufweisen. Eine Steuergeräteseite und eine Feldgeräteseite. Die Steuergeräteseite bezeichnet dabei den Bereich des Anschlusses des Feldbus der Funkübertragungseinrichtung an dem die Steuereinrichtung mit dem Bus verbunden ist. Die Feldgeräteseite bezeichnet die Seite des Anschlusses des Feldgeräts an dem Feldbus der Funkübertragungseinrichtung. Zwischen der Steuergeräteseite und der Feldgeräteseite der Funkübertragungseinrichtung findet nach entsprechenden Umwandlungen die Funkübertragung statt. Die Speichereinrichtung kann sowohl auf der Steuereinrichtungsseite der Funkübertragungseinrichtung als auch auf der Feldgeräteseite der Funkübertragungseinrichtung angeordnet sein. In anderen Worten kann die Messinformation bei steuergeräteseitiger Speicherung ohne Luftübertragung eines Anfragesignals bereitgestellt werden. Bei feldgeräteseitiger Speicherung, muss zuerst das Anfragesignal über die Luft übertragen werden.

Gemäß weiterer Ausführungsbeispiele der vorliegenden Erfindung ist die Steuereinrichtung als HART®-Master und das Feldgerät als HART®-Slave ausgebildet. Vorteilhaft kann ein HART®-Master mit einem HART®-Slave kommunizieren.

Gemäß einem weiteren Ausführungsbeispiel der vorliegenden Erfindung wird ein Datenübertragungssystem angegeben, wobei das Feldgerät als Sensor aus der Gruppe Füllstandssensor, Drucksensor oder Grenzstandssensor ausgebildet ist. Vorteilhaft kann somit eine drahtlose Kommunikation zum Messen von Füllständen, Drücken und/oder Grenzständen eingesetzt werden.

Gemäß einem weiteren Ausführungsbeispiel wird ein Datenübertragungssystem angegeben, wobei die Steuereinrichtung ausgebildet ist, auf eine Antwort auf eine eigene Anfrage frühestens nach 75 ms eine neue Anfrage zu stellen. Vorteilhaft kann durch das Warten einer Steuereinrichtung von mindestens 75 ms eine Zugriffssteuerung auf das Feldgerät realisiert werden.

Die HART®-Spezifikation ermöglicht den wechselseitigen Zugriff von zwei Mastern auf den HART®-Bus bzw. auf einen oder mehrere Slaves durch Regeln, die den zeitlichen Zugriff der Master auf den Bus festlegen. Auf die Antwort einer eigenen Anfrage darf ein Master frühestens nach 75 ms erneut eine Anfrage stellen. Auf eine Antwort einer fremden Anfrage darf ein Master jedoch bereits nach 20 bis 75 ms eine neue Anfrage stellen. Somit kann gewährleistet werden, dass die zwei Master immer abwechselnd zum Zuge kommen.

Das bedeutet, durch den Einsatz der Funktechnologie ist ein mittels der Funktechnologie nachgebildeter physikalischer Bus von der Reichweite von Funksignalen abhängig. An einem Bus können mehrere Geräte angeschlossen sein. Innerhalb des Empfangsbereichs der Funkübertragungseinrichtung ist es möglich, mehrere Steuereinrichtungen oder Master bzw. mehrere Feldgeräte bzw. Slaves einzusetzen. Es kann vorkommen, dass die Funkreichweite einer Funkübertragungseinrichtung durch einen Kreis um beispielsweise die Feldgeräteseite der Funkübertragungseinrichtung, insbesondere um eine Antenne eines Teils einer feldgeräteseitigen Funkübertragungseinrichtung festgelegt ist. Der Radius dieses Kreises ist durch die Funksignalreichweite vorgegeben. Liegen die steuergeräteseitigen Teile der Funkübertragungseinrichtung auf diesem Umfang, kann eine Kommunikation zwischen dem entsprechenden Master und dem Slave stattfinden. In anderen Worten bedeutet das, dass sich der entsprechende Master und Slave sehen können.

Ein weiterer Master kann ebenfalls auf dem Umfang um die feldgeräteseitige Seite der Funkübertragungseinrichtung liegen. Kommt der zweite Master bzw. die zweite steuergeräteseitige Seite der Funkübertragungseinrichtung auf dem Kreis gegenüber der Steuergeräteseite der Funkübertragungseinrichtung des ersten Steuergeräts zu liegen, so erreicht das Funksignal des Masters zwar die slaveseitige Seite der Funkübertragungseinrichtung, jedoch nicht die des zweiten Masters.

Anfragen, die von den Mastern an den Slave geschickt werden, können die beiden Master gegenseitig nicht sehen. Allerdings sehen sie die Antwortsignale des Slaves an den jeweiligen Master, da sie beide in dessen Funkweite liegen. Der Master, der eine Antwort des Slaves erhält, kann durch Analyse des Antwortsignals erkennen, ob es sich um eine Antwort auf eine von ihm gesendete Anfrage handelt. Handelt es sich um eine Anfrage, die der entsprechende Master selbst gesendet hat, so muss er, falls er eine neue Anfrage stellen möchte, mindestens 75 ms warten. Es handelt sich bei der Anfrage um eine eigene Anfrage.

Während dieser Wartezeit bzw. Zwangspause wird einem anderen Master die Möglichkeit gegeben, eine Anfrage an den Slave zu richten und auf den Bus insbesondere die Funkübertragungsstrecke zuzugreifen. Zur Berücksichtigung aller möglicher Latenzzeiten, die durch das Ein- und Auspacken der Bussignale in Funksignale auftreten können, kann es erforderlich sein, auf eine eigene Anfrage 500 ms oder länger zu warten, bis eine erneute Anfrage des Masters an den Slave gesendet wird. Damit kann gewährleistet werden, dass der andere Master eine Anfrage an den Slave richten kann.

Gemäß einem weiteren Ausführungsbeispiel der vorliegenden Erfindung wird ein Datenübertragungssystem angegeben, bei dem die Steuereinrichtung ausgebildet ist, auf eine fremde Anfrage eine neue Anfrage innerhalb eines Bereichs von 20 ms bis 75 ms zu stellen. Wird nach dem Empfang einer Antwort auf eine Anfrage des anderen Masters innerhalb eines Zeitbereichs von 20 ms bis 75 ms eine Anfrage von dem Master an den Slave gesendet, kann aufgrund des Zeitverhaltens gemäß dem HART®-Protokoll sichergestellt werden, dass in dieser Zeit der andere Master keine Anfrage an den Slave richtet. Bei der Wahl dieses Zeitfensters sind gegenüber dem HART®-Standard Zeiten, die durch das zusätzliche Ein- und Auspacken der Signale in Funksignale entstehen, zu berücksichtigen.

Gemäß einem weiteren Ausführungsbeispiel der vorliegenden Erfindung wird eine Steuereinrichtung zur drahtlosen Kommunikation mit einem Feldgerät angegeben. Die Steuereinrichtung umfasst eine Feldbusumsetzungseinrichtung, eine Timeout-Anpassungseinrichtung, wobei die Feldbusumsetzungseinrichtung ausgebildet ist, ein Steuersignal in ein Feldbussignal umzusetzen. Dabei ist die Timeout-Anpassungseinrichtung ausgebildet, ein Zeitverhalten der Feldbusumsetzungseinrichtung einzustellen.

Eine Feldbusumsetzungseinrichtung erlaubt es protokollspezifische Kommandos in Feldbussignale umzusetzen. Diese Umsetzung erfolgt entsprechend einem Feldbus-Protokoll. Das Feldbus-Protokoll bzw. die Feldbusumsetzungseinrichtung kann einen Timer aufweisen, der zur Überwachung des Ablaufes einer bestimmten Wartezeit dienen kann. Dabei kann es sich beispielsweise um ein Register, das in einer entsprechenden Zeiteinheit heruntergezählt wird, handeln. Mittels einer Timeout-Anpassungseinrichtung kann sich dieses Timeout- bzw. Zeitverhalten an geänderte Umstände anpassen lassen. Beispielsweise kann so ein Zeitverhalten berücksichtigt werden, das sich gegenüber einem Standard durch die Einführung einer Funksignalübertragung geändert hat. Beispielsweise können so längere Signallaufzeiten berücksichtigt werden.

Gemäß weiterer Ausführungsbeispiele der vorliegenden Erfindung gelten die bei dem Datenübertragungssystem genannten Merkmale entsprechend für die Steuereinrichtung. Es kann ein HART®-Bus Protokoll in seinem Zeitverhalten an geänderte Randbedingungen angepasst werden.

Gemäß einem weiteren Ausführungsbeispiel der vorliegenden Erfindung wird eine Sende-Empfangseinrichtung oder ein Transceiver, umfassend eine Sendeeinrichtung und eine Empfangseinrichtung, angegeben. Dabei ist die Sendeeinrichtung ausgebildet ein Feldbus-Protokoll in ein Funk-Protokoll umzusetzen und Funkprotokoll-Pakete zu senden und die Empfangseinrichtung ist ausgebildet das Funk-Protokoll in das Feldbus-Protokoll umzusetzen und Funkprotokollpakete zu empfangen.

Durch das Senden und Empfangen eines Feldbus- bzw. Funksignals kann eine bidirektionale Kommunikation über die Sende-Empfangseinrichtung gewährleistet werden.

Vorteilhaft können mehrere Sende-Empfangseinrichtungen miteinander kommunizieren. Dadurch kann ein Feldbus simuliert werden. Vorteilhaft können Standard-Feldbusgeräte an eine Sende-Empfangseinrichtung angeschlossen werden. Für Standard-Feldbusgeräte, beispielsweise Steuergeräte bzw. Feldgeräte, erscheint der von der Sende-Empfangseinrichtung nachgebildete Bus als ein transparenter kompatibler Feldbus.

Gemäß einem weiteren Ausführungsbeispiel der vorliegenden Erfindung wird eine Sende-Empfangseinrichtung angegeben, wobei die Sende-Empfangseinrichtung ausgebildet ist, ein Analogsignal zu übertragen. Vorteilhaft wird es dadurch ermöglicht, beispielsweise einen Messsignalgeber oder Sensor, der ein Analogsignal liefert, direkt an die Sende-Empfangseinrichtung anzuschließen und das gelieferte Signal zu übertragen. Dabei kann das Signal vor der Übertragung in ein Feldbussignal, d. h. in ein Signal entsprechend einem Feldbus-Protokoll, umgewandelt werden. Vorteilhaft kann dadurch das Signal von einem Standard-Feldbus-Master bzw. einem Standard-Feldbus-Steuergerät empfangen und ausgewertet werden.

Das Analogsignal kann beispielsweise ein 4...20mA-Signal sein.

Gemäß einem weiteren Ausführungsbeispiel der vorliegenden Erfindung wird eine Sende-Empfangseinrichtung angegeben, wobei die Sende-Empfangseinrichtung ausgebildet ist, ein Schaltsignal zu übertragen. Somit ist es möglich, direkt an die Sende-Empfangseinrichtung einen Sensor oder beispielsweise einen Kontaktschalter, wie einen Alarmschalter, anzuschließen. Das Schaltsignal kann in ein feldbuskompatibles Signal gewandelt werden und über die Funkübertragungsstrecke übertragen werden.

Gemäß einem weiteren Ausführungsbeispiel der vorliegenden Erfindung wird eine Sende-Empfangseinrichtung angegeben, wobei die Sende-Empfangseinrichtung eine Speichereinrichtung aufweist. Die Speichereinrichtung ist ausgebildet, eine Feldbus-Protokollinformation zu speichern und die Speichereinrichtung ist dabei ausgebildet, bei Bedarf die gespeicherte Information bereitzustellen. Das Format der gespeicherten Daten kann entweder einem Feldbus Paket entsprechen oder aber es können die reinen Nutzdaten, die aus dem Feldbus Paket ausgepackt wurden gespeichert werden. Vorteilhaft lassen sich so Informationen, die beispielsweise von einem oder mehreren Feldgeräten, die an der Sende-Empfangseinrichtung angeschlossen sind, gesammelt werden und in der Speichereinrichtung abgelegt werden.

Bei dem Empfang einer Anfrage kann von der Sende-Empfangseinrichtung eine in der Speichereinrichtung abgelegte Information, beispielsweise ein abgelegtes Messsignal, bereitgestellt werden. Die Bereitstellung kann beispielsweise über die Luftschnittstelle der Sende-Empfangseinrichtung über Funk erfolgen. Beispielsweise können auch über die Funkschnittstelle empfangene Signale abgespeichert werden.

Viele Fortbildungen der Erfindung wurden bezugnehmend auf das Datenübertragungssystem zur drahtlosen Kommunikation beschrieben. Diese Ausgestaltungen gelten auch für die Steuereinrichtung, die Sende-Empfangseinrichtung und für das Verfahren zur drahtlosen Kommunikation in einem Datenübertragungssystem.

Im Folgenden werden vorteilhafte Ausführungsbeispiele der vorliegenden Erfindung mit Verweis auf die Figuren beschrieben.

Fig. 1 zeigt ein schematisches Blockdiagramm einer Steuereinrichtung gemäß einem Ausführungsbeispiel der vorliegenden Erfindung.

Fig. 2 zeigt ein schematisches Blockdiagramm einer Sende-Empfangseinrichtung gemäß eines Ausführungsbeispiels der vorliegenden Erfindung.

Fig. 3 zeigt schematisch eine drahtgebundene Bus-Anordnung zwischen einer Steuereinrichtung und einem Feldgerät.

Fig. 4 zeigt ein schematisches Blockdiagramm einer Anordnung zur drahtlosen Kommunikation zwischen einer Steuereinrichtung und eines Feldgeräts mittels einer Funkübeutragungseinrichtung gemäß eines Ausführungsbeispiels der vorliegenden Erfindung.

Fig. 5 zeigt ein schematisches Blockdiagramm zur drahtlosen Kommunikation zwischen einem Steuergerät und zwei Feldgeräten gemäß der vorliegenden Erfindung.

Fig. 6 zeigt ein weiteres Blockdiagramm zur drahtlosen Kommunikation zwischen einer Steuereinrichtung und zweier Feldgeräte gemäß einem Ausführungsbeispiel der vorliegenden Erfindung.

Fig. 7 zeigt ein schematisches Blockdiagramm zur drahtlosen Kommunikation zwischen einer Steuereinrichtung und einem Feldgerät und dem Anschluss von nicht HART®-Geräten gemäß der vorliegenden Erfindung.

Fig. 8 zeigt ein Anfrage-Antwort-Zeitdiagramm gemäß einem Ausführungsbeispiel der vorliegenden Erfindung.

Fig. 9 zeigt ein schematisches Blockdiagramm einer Anordnung zum Zugriff von zwei Mastern innerhalb einer Funkreichweite auf ein Feldgerät gemäß einem Ausführungsbeispiel der vorliegenden Erfindung.

Fig. 10 zeigt ein Timingverhalten gemäß einem Ausführungsbeispiel der vorliegenden Erfindung.

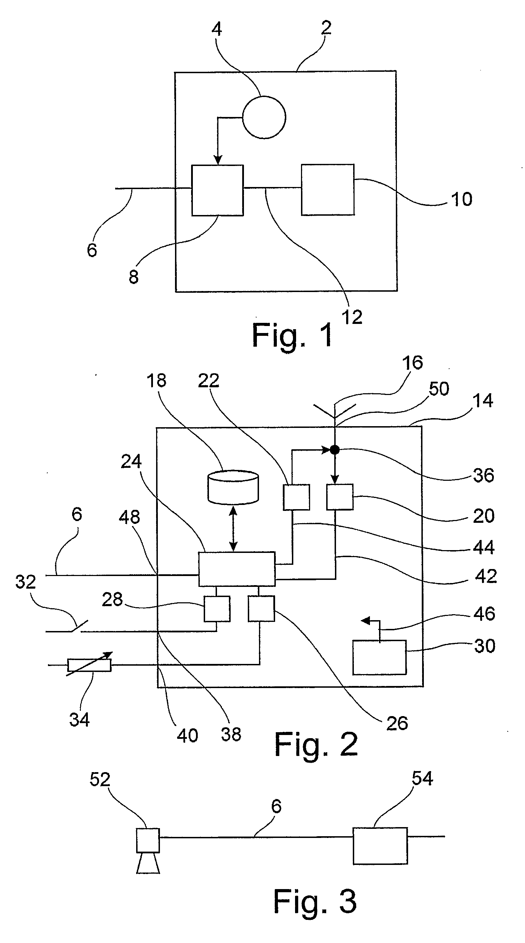

Die Darstellungen in den Figuren sind schematisch und nicht maßstäblich. In der folgenden Beschreibung der Fig. 1 bis Fig. 9 werden die gleichen Bezugsziffern für gleiche oder sich entsprechende Elemente verwendet.

Fig. 1 zeigt ein schematisches Blockdiagramm einer Steuereinrichtung gemäß einem Ausführungsbeispiel der vorliegenden Erfindung. Die in Fig. 1 dargestellte Steuereinrichtung 2 umfasst eine Feldbusumsetzungseinrichtung 8 und eine Timeout-Anpassungseinrichtung 4. Die Steuereinrichtung 2 umfasst weiter die Steuersignaleinrichtung 10 und den Feldbus 6 bzw. das Feldbus-Interface 6. Die Steuersignaleinrichtung 10 kann beispielsweise mit einer Eingabeeinrichtung verbunden sein, über die die Steuereinrichtung 2 Kommandos zum Erfassen von Messwerten erhält.

In der Steuersignaleinrichtung 10 werden die beispielsweise über eine Mensch-Maschine-Schnittstelle zur Verfügung gestellten Eingangssignale bzw. Kommandos in feldbusspezifische Kommandos umgewandelt. Diese Kommandos entsprechen dem HART®-Protokoll.

Die Steuersignaleinrichtung 10 ist über die Verbindung 12 mit der Feldbusumsetzungseinrichtung 8 verbunden. Die von der Steuersignaleinrichtung 10 erzeugten Kommandos werden in der Feldbusumsetzungseinrichtung 8 in entsprechende Feldbussignale, die dem Feldbus bzw. HART®-Protokoll gehorchen, umgesetzt. Dabei kann über die Timeout-Anpassungseinrichtung 4 ein Timeout-Verhalten des HART®-Protokolls angepasst werden. Dazu ist die Timeout-Anpassungseinrichtung 4 mit der Feldbusumsetzungseinrichtung 8 verbunden. Die Timeout-Anpassungseinrichtung 4 kann beispielsweise Informationen über das richtige Timeout-Verhalten über eine Mensch-Maschine-Schnittstelle erhalten.

Die Timeout-Anpassungseinrichtung 4 hat Zugriff auf ein Register, in der protokollspezifische Daten des HART®-Protokolls in der Feldbusumsetzungseinrichtung 8 abgespeichert sind. In der Feldbusumsetzungseinrichtung 8 läuft das HART®-Protokoll ab, das auch auf die veränderten Timer bzw. Registerwerte zurückgreift. Deshalb wird auch in der Feldbusumsetzungseinrichtung 8 das entsprechende Feldbussignal bzw. HART®-Signal für eine Abfrageanfordeuung an den Feldbus 6 ausgegeben. Der Master 2 bzw. die Steuereinrichtung 2 kann somit einen Slave, der sich an dem Feldbus 6 befindet, adressieren. Das von dem Master 2 erwartete Antwortsignal wird in der Feldbusumsetzungseinrichtung 8 erkannt. Sollte es nicht innerhalb des von dem Timer vorgegebenen Zeitraums vorliegen wird das Nichtvorliegen höheren Protokollinstanzen z.B. in der Steuersignaleinrichtung 10 mitgeteilt.

Die Steuereinrichtung 2 oder Master 2 empfängt über den Feldbus 6 Antwortsignale, die von Feldgeräten kommen. Die Feldbusumsetzungseinrichtung 8 empfängt über Feldbus 6 die dem HART®-Protokoll entsprechenden Signale und wandelt diese in HART®-Kommandos um. Die HART®-Kommandos werden über Verbindung 12 an die Steuersignaleinrichtung 10 zur Auswertung weitergegeben. Beispielsweise kann die Steuersignaleinrichtung 10 ein Mikroprozessor sein, der die Steuereinrichtung 2 steuert.

Fig. 2 zeigt ein schematisches Blockdiagramm einer Sende-Empfangseinrichtung gemäß eines Ausführungsbeispiels der vorliegenden Erfindung. Die Fig. 2 zeigt den schematischen Aufbau einer Sende-Empfangseinrichtung 14 oder Funkmodul 14. Das Funkmodul 14 weist vier externe Anschlüsse auf. Die externen Anschlüsse sind der Analogsignalanschluss 40, der Schaltsignalanschluss 38, der Feldbus- bzw. HART®-Bussignalanschluss 48 und der Antennenanschluss 50. Mittels zweier Funkmodulen 14 lässt sich ein HART®-Bus auftrennen und nachbilden. An dem HART®-Busanschluss 48 wird ein Standard-HART®-Bus Medium 6 angeschlossen, an dem sowohl ein HART®-Master, Auswertegerät oder Steuergerät als auch eine beliebige Anzahl von HART®-Slaves, Feldgeräten bzw. Sensoren angeschlossen werden können.

Zur einfachen Beschreibung sei nun angenommen, dass sich ein einzelner HART®-Master an dem HART®-Bus 6 angeschlossen befindet. Aufgrund der bidirektionalen Übertragung auf dem HART®-Bus 6 kann der HART®-Master sowohl HART®-Protokollsignale bzw. HART®-Telegramme senden als auch empfangen. Beim Senden gibt der HART®-Master ein dem HART®-Protokoll entsprechendes HART®-Telegramm auf dem HART®-Bus 6 aus. Das Telegrammpaket gelangt auf die Multiplexeinrichtung 24. Die Multiplexeinrichtung 24 leitet das zu sendende HART®-Telegramm über die Sendeleitung 44 weiter an die Sendeeinrichtung 22.

In der Sendeeinrichtung 22 wird das HART®-Telegramm in ein Funktelegramm gepackt. Dabei werden beispielsweise Overheadbytes für Prüfsummen oder andere fünkrelevante Vorkehrungen vorgenommen. Ebenfalls wird das HART®-Telegramm physikalisch an die Funkübertragung angepasst. Die Sendeeinrichtung 22 leitet das so aufbereitete Funktelegramm an die Ein-Auskoppeleinrichtung 36 weiter. Dort wird das Signal anschließend auf die Antenne 16 über den Antennenanschluss 50 weitergeleitet. Von der Antenne 16 breitet sich das Funksignal, das das Funktelegramm enthält, über die Luftschnittstelle weiter aus. In dem Funktelegramm ist das HART®-Telegramm eingepackt.

Beim Empfangen empfängt Antenne 16, die sowohl intern als auch extern betrieben werden kann, ein Funktelegramm. Das Funktelegramm wird von Antenne 16 über den Antennenanschluss 50 zu der Ein-Auskoppeleinrichtung 36 weitergeleitet. In der Ein-Auskoppeleinrichtung 36 wird es als empfangenes Funlcsignal erkannt und daher an die Empfangseinrichtung 20 weitergeleitet. In der Empfangseinrichtung 20 wird das Funktelegramm in das HART®-Telegramm zurückgewandelt. Zum Zurückwandeln werden ggf. vorhandene Overheadbytes für beispielsweise Prüfsummen, die für die Funkübertragung genutzt werden, entfernt.

Die Empfangseinrichtung 20 packt das in dem Funkpaket enthaltene HART®-Telegramm aus und gibt es über die Empfangsleitung 42 an die Multiplexeinrichtung 24 weiter. Die Multiplexeinrichtung 24 gibt das empfangene HART®-Telegramm auf dem HART®-Bus 6 über den HART®-Busanschluss 48 aus. Über den HART®-Bus 6 gelangt das dem HART®-Protokoll entsprechende HART®-Paket an den HART®-Master. So kann der HART®-Master beispielsweise eine geforderte Antwort von einem HART®-Slave oder Feldgerät empfangen.

Ebenso kann, da es sich um einen Standard-HART®-Bus 6 handelt, an den HART®-Busanschluss 48 bzw. an dem HART®-Bus 6 ein HART®-Slave oder Feldgerät angeschlossen werden. Empfängt die Antenne 16 ein Funktelegramm, so wird das Funktelegramm über den Antennenanschluss 50 an die Ein-Auskoppeleinrichtung 36 weitergeleitet. Dort wird das empfangene Funktelegramm als ein empfangenes Funktelegramm erkannt und an die Empfangseinrichtung 20 weitergeleitet.

Die Empfangseinrichtung 20 entpackt das in dem Funktelegramm enthaltene HART®-Telegramm und leitet über die Empfangsleitung 42 das HART®-Telegramm an die Multiplexeinrichtung 24 weiter. Dieser Vorgang findet transparent statt. D. h. der Inhalt des HART®-Telegramms wird nicht interpretiert. Es findet lediglich eine Interpretation der Protokollschichten, die für die Umsetzung des HART®-Protokolls auf das Funkprotokoll bzw. von dem Funkprotokoll in das HART®-Protokoll benötigt werden, statt.

Messdaten bzw. andere in dem Telegramm enthaltene Informationen, die für den Master bzw. den Slave bestimmt sind, werden in der Sende- bzw. Empfangseinrichtung 22, 20 und folglich in der Sende-Empfangseinrichtung 14 nicht ausgewertet. Das empfangene HART®-Telegramm wird über die Multiplexeinrichtung 24 auf den HART®-Bus über den HART®-Bus bzw. Feldbusanschluss 48 weitergegeben.

Der HART®-Bus 6 entspricht einem Standard-HART®-Bus. D. h. Funkmodul bzw. Sende-Empfangseinrichtung 14 sind für einen HART®-Master bzw. HART®-Slave transparent. Beispielsweise kann es sich bei dem empfangenen HART®-Telegramm um eine Anfrage eines Masters an einen HART®-Slave handeln. Der HART®-Slave, das Feldgerät bzw. der Sensor kann gemäß dem HART®-Protokoll die HART®-Anfrage auswerten und eine Antwort, z. B. ein Messsignal, als HART®-Telegramm auf dem HART®-Bus ausgeben. Diese Antwort erreicht über den Standard-HART®-Bus 6 und den HART®-Busanschluss 48 das Funkmodul 14 und gelangt von dort auf die Multiplexeinrichtung 24.

Die Multiplexeinrichtung 24 gibt das HART®-Telegramm auf die Sendeleitung 44 aus, über die es zu der Sendeeinrichtung 22 gelangt. In der Sendeeinrichtung 22 wird das dem HART®-Protokoll entsprechende Antwortsignal in ein Funktelegramm gewandelt und über die Ein-Auskoppeleinrichtung 36 und Antenne 16 in die Luft zu einem entfernten Funkmodul gefunkt.

Die Antenne 16 kann sowohl eine fest eingebaute Antenne sein als auch eine abnehmbare Antenne. Sie kann sich extern oder intern in dem Funkmodul 14 befinden. Die Verwendung einer abnehmbaren bzw. austauschbaren Antenne 16 erlaubt es beispielsweise durch die Verwendung besonderer Antennen mit einer besonderen Strahlungscharakteristik die Reichweite des Funksignals zu erhöhen.

In der Regel werden Rundstrahler oder sog. Omni-Antennen verwendet, die eine kugelförmige Ausbreitung des Funksignals erzielen. Damit lässt sich mit in Europa üblichen Sendeleistungen im Frequenzbereich 2,4 GHz eine Reichweite des Funksignals von ca. 500 m erreichen. Bei der Verwendung eines anderen Frequenzbereichs, z. Bsp. 900 MHz, wie beispielsweise in den USA zulässig, kann mit einem Kugelstrahler eine Reichweite von 1600 m erzielt werden. Beide Werte beziehen sich auf direkte line of sight, also ohne störenden Hindernissen. Die Verwendung von besonderen Sektor- bzw. Richtantennen erlaubt es, höhere Reichweiten zu erzielen.

Fig. 2 zeigt ebenfalls den Schaltsignalanschluss 38. Dieser ist vorgesehen, um einfache Schalter direkt an dem Funkmodul ohne zusätzlicher Nutzung eines Slaves anschließen zu können. Ein Schalter kann beispielsweise ein Alannsensor sein. Der Schalter 32 bzw. das von ihm erzeugte Schaltsignal wird über den Schaltsignalanschluss an den Schaltsignalaufbereiter 28 weitergeleitet. Dort wird das Schaltsignal in ein entsprechendes HART®-Bus-Telegramm gewandelt und kann so über den Multiplexer 24 über den vorher beschriebenen Funkweg einem HART®-Master zur Auswertung zur Verfügung gestellt werden.

Ähnlich wird ein Analogsignal bzw. ein Analogsignalgeber 34 eingesetzt. Bei dem Analogsignal kann es sich um ein 4...20mA-Signal 34 handeln. Dieses wird an dem Analogsignalanschluss 40 mit dem Funkmodul 14 verbunden. Über diesen Anschluss 40 gelangt das Analogsignal in den Analogsignalumformer 26, der das Analogsignal digitalisiert und in ein entsprechendes HART®-Protokoll Paket wandelt. Wie oben beschrieben und analog zu dem digitalen Schaltsignal kann das Analogsignal über die Funkstrecke einem Master bzw. Steuergerät zur Auswertung zur Verfügung gestellt werden.

Ein Funkmodul 14 kann mehrere Analogsignalanschlüsse 40 bzw. Schaltsignalanschlüsse 38 und entsprechende Umformeinrichtungen 28 und 26 aufweisen. In dem Funkmodul 14 ist auch die Speichereinrichtung 18 vorgesehen. Die Speichereinrichtung 18 steht mit der Multiplexeinrichtung 24 in Verbindung. Über die Speichereinrichtung 18 wird das Funkmodul in die Lage versetzt, laufend im Hintergrund Messwerte zu sammeln. Die Messwerte, werden von einem an den Feldbus 6 angeschlossenen Feldgerät oder über den Schaltsignalanschluss 38 oder den Analogsignalanschluss 40 geliefert.

Sollten mehrere Feldgeräte an dem HART®-Bus 6 angeschlossen sein, so ist auch eine Sammlung der jeweils von den einzelnen Sensoren bzw. Feldgeräten gelieferten Daten möglich. Der Vorteil der autarken Sammlung der Messsignale in dem Funkmodul 14 mit der Speichereinrichtung 18 ist, dass bei einer Anfrage eines anderen Funkmoduls nach einem Messwert das Funkmodul 14 die Anfrage direkt beantworten. D. h. Funkmodul 14 muss kein HART®-Telegramm über den HART®-Anschluss 48 auf den HART®-Bus 6 an den Sensor oder das Feldgerät weiterleiten, sondern kann über die Multiplexeinrichtung 24 auf den Datenspeicher 18, in dem die relevanten Sensorwerte gespeichert sind, zurückgreifen.

Das Funkmodul kann die Anfrage somit direkt beantworten, ohne dass die Notwendigkeit besteht, diese Anfrage an den HART®-Bus in Richtung eines Sensors auszugeben. Dadurch wird das Antwortverhalten bezüglich Messwertabfragen verbessert. Die Abfrage kann somit beschleunigt werden und asynchron d.h. zu beliebigen Zeitpunkten erfolgen.

Der Mikroprozessor 30 steuert sowohl die Umwandlung der Schalt- und Analogsignale in den Umwandeleinrichtungen 26 und 28 als auch den Zugriff bzw. die Verteilung der Information auf die Speichereinrichtung 18. Mikroprozessor 30 steuert den Sende- und Empfangsprozess, d. h. er steuert die Sendeeinrichtung 22 und die Empfangseinrichtung 20. Mikroprozessor 30 steuert ebenfalls das Verteilen der Informationen in der Multiplexeinrichtung 24. Dazu ist der Mikroprozessor 30 mit den Einrichtungen 26, 28, 24, 18, 20 und 22 verbunden. Diese Verbindung ist durch den gestrichelten Pfeil 46 in Fig. 2 angedeutet.

Die Abfrage des Sensors bzw. Feldgeräts bzw. die Abfrage im Hintergrund wird ebenfalls vom Mikroprozessor 30 gesteuert. Über Mikroprozessor 30 lässt sich auch die Abfragefrequenz bzw. das Pollingintervall einstellen.

Fig. 3 zeigt eine drahtgebundene Kommunikation zwischen einem bekannten Auswertegerät 54, HART®-Master 54 oder Steuergerät 54 und Sensor 52 bzw. Feldgerät 52 oder HART®-Slave 52. Der HART®-Master 54 ist mit dem HART®-Slave 52 über den Feldbus 56 verbunden. Beispielsweise kann es sich bei dem Feldbus 56 um ein geschirmtes Twisted Pair Kabel gemäß #18 AWG handeln. AWG ist ein US-Standard und steht für American Wire Gauge. #18 AWG ist ein Kabel mit einem Durchmesser von 1,02 mm. Abhängig von der Kabelkapazität bzw. der Anzahl angeschlossener Geräte lässt sich mit einem #18 AWG Kabel eine Buslänge des HART®-Bus 6 von zwischen 700 m und 3000 m erzielen.

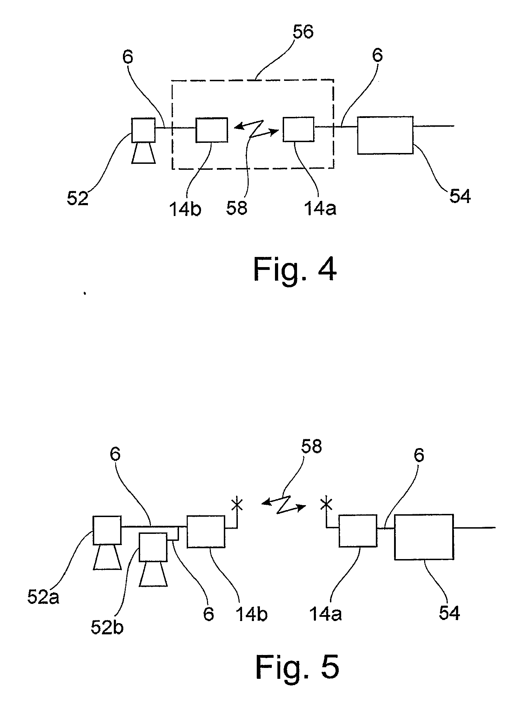

Fig. 4 zeigt ein schematisches Blockdiagramm einer Anordnung zur drahtlosen Kommunikation zwischen einer Steuereinrichtung und eines Feldgeräts mittels einer Funkübertragungseinrichtung gemäß eines Ausführungsbeispiels der vorliegenden Erfindung. Fig. 4 zeigt wie mittels der Funkübertragungseinrichtung 56 der HART®-Bus 6 zwischen dem HART®-Master 54 und dem HART®-Slave 52 aufgetrennt und durch eine Funkverbindung ersetzt werden kann. Die Funkübertragungseinrichtung 56 umfasst die beiden identischen Funkmodule 14a und 14b. Das Funkmodul 14a ist über einen Standard-HART®-Bus 6 mit dem HART®-Master 54 verbunden. Es befindet sich auf der Steuergeräteseite der Funkübertragungseinrichtung 56. Das Funkmodul 14b ist über einen Standard-HART®-Bus 6 auf der Feldgeräteseite der Funkübertragungseinrichtung 56 mit dem HART®-Slave, beispielsweise einem Sensor 52, fest verbunden.

Zwischen den beiden Funkmodulen 14a und 14b findet eine Funkübertragung über die Funkstrecke 58 statt. Bei dem Funk-Protokoll der Funkstrecke 58 handelt es sich um ein in Funktelegramme eingepackten HART®-Protokoll. Dafür wird der Name HART® over Air verwendet. Das Funk-Protokoll HART® over Air erlaubt eine bidirektionale Kommunikation der beiden Funkmodule 14a und 14b. Der Sensor 52 zusammen mit dem Funkmodul 14b kann ebenso wie der HART®-Master 54 und das Funkmodul 14a beweglich sein. Solange sich die Funkmodule 14a und 14b in Funkreichweite befinden, kann eine Kommunikation zwischen ihnen stattfinden. Die Funkreichweite wird durch eine ausreichende Signalstärke definiert, bei der ein gesendetes Signal gerade noch empfangen und ausgewertet werden kann.

Fig. 5 zeigt eine drahtlose Kommunikation zwischen einem HART®-Master 54 und zweier Sensoren 52a und 52b. Die Kommunikation erfolgt ähnlich wie in Fig. 4 beschrieben, das von Funkmodul 14b empfangene Funksignal wird auf dem HART®-Bus 6 ausgegeben. An dem HART®-Bus 6 des Funkmoduls 14b sind jedoch zwei Sensoren 52a und 52b angeschlossen. Beide empfangen das vom Funkmodul 14b aus dem Funktelegramm extrahierte HART®-Telegramm.

Gemäß dem HART®-Standard ist es möglich, mehrere Slaves an einem HART®-Bus 6 zu betreiben. Entsprechend der HART®-Spezifikation ist eine Adressierung der Sensoren möglich. Da die Funkübertragung mittels der Funkmodule 14a, 14b und der Funkstrecke 58 transparent für den HART®-Master 54, und die Sensoren 52a und 52b ist, kann die Adressierung und Kommunikation genauso erfolgen, wie über einen Standard-HART®-Bus. Deshalb lässt sich von Master 54 der entsprechende Sensor anfragen.

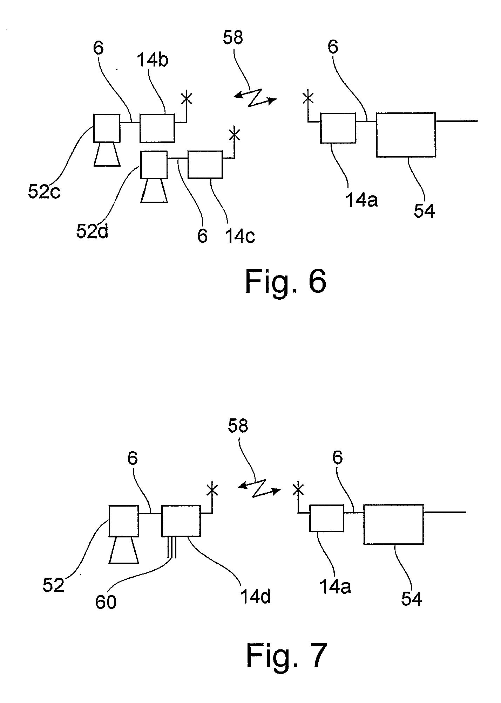

Fig. 6 zeigt eine weitere Möglichlceit, zwei Sensoren 52c, 52d mit einem HART®-Master 54 mittels einer drahtlosen Kommunikation zu verbinden. Die Luft ersetzt die Funktion eines physikalischen Busses, d.h. eines gemeinsamen geteilten Mediums. Deshalb können alle Funkmodule, die in Reichweite eines Funksignals zwischen zwei Funkmodulen liegen, als zu dem Bus zugehörig betrachtet werden.

In Fig. 6 sind die Funkmodule 14a, 14b und 14c in Funkreichweite. D. h. sie sehen alle ein von einem der Funkmodule ausgesendetes Funksignal 58. Beispielsweise sendet Funlcmodul 14a eine Anfrage von Master 54 auf die Funkstrecke 58. Das Funktelegramm wird sowohl von Funlunodul 14b und 14c empfangen. Beide Funkmodule geben das extrahierte HART®-Telegramm auf dem jeweils an ihnen angeschlossenen HART®-Bus 6 an den jeweils angeschlossenen Sensor 52c bzw. 52d weiter. Diese Anschlussvariante ist vergleichbar mit dem Anschluss mehrerer Sensoren an einem physikalischen HART®-Bus. Mittels der dem HART®-Standard entsprechenden Adressierung kann das gewünschte Feldgerät 52c, 52d ausgewählt werden. Nur das entsprechend adressierte Feldgerät liefert ein Antwortsignal an den Master 54.

Fig. 7 zeigt ein schematisches Blockdiagramm zur drahtlosen Kommunikation zwischen einer Steuereinrichtung und einem Feldgerät und dem Anschluss von nicht HART®-Geräten gemäß der vorliegenden Erfindung. Fig. 7 zeigt eine drahtlose Kommunikation zwischen HART®-Master 54 und HART®-Slave 52. Dazu ist der HART®-Bus 6 aufgetrennt und mittels Funkmodule 14a, 14d und Funkstrecke 58 ersetzt. Das Funkmodul 14d weist zusätzliche Anschlüsse 60 auf. Diese zusätzlichen Anschlüsse 60 können zu dem direkten Anschluss von Analogsignalen, insbesondere 4...20mA-Signalen oder Digital- bzw. Schaltsignalen, dienen. Es gibt somit noch die Möglichkeit, neben dem HART®-Anschluss 6 weitere Sensoren an den Anschlüssen 60 anzuschließen, die nicht nach dem HART®-Standard arbeiten. Diese Anschlüsse werden beispielsweise für 4...20mA-Signale oder für einfache Schalter bereitgestellt. Wegen der Übertragung der Signale über die Luftschnittstelle müssen ggf. die analogen Signale noch digitalisiert und HART®-fähig gemacht werden.

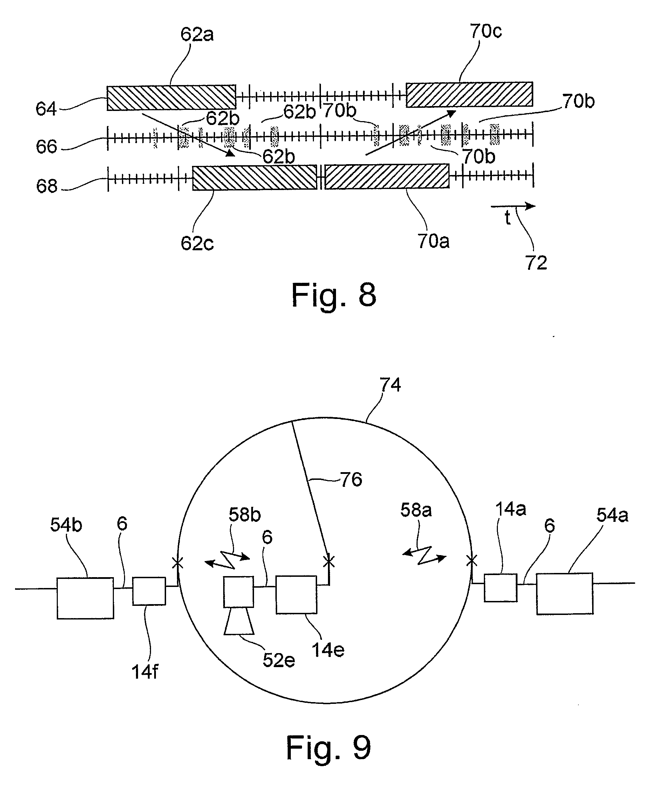

Fig. 8 zeigt ein Anfrage-Antwort-Zeitdiagramm gemäß einem Ausführungsbeispiel der vorliegenden Erfindung. Die Fig. 8 zeigt, wie sich aufgrund des Einbaus von Funkmodulen zusätzliche Verzögerungen im Zeitverhalten für eine Anfrage 62a bzw. eine Antwort 70a gemäß dem HART®-Protokoll ergeben. Das Zeitdiagramm 64 zeigt den zeitlichen Verlauf eines HART®-Anfragepakets 62 am Ort eines Funkmoduls 14, das mit einem Master verbunden ist. Das Anfragepaket 62a wird von dem Master auf dem HART®-Bus ausgegeben und gelangt an das mit dem HART®-Master verbundene Funkmodul 14. Das Anfragepaket 62a wird von dem Funkmodul 14 in entsprechende Telegramme des Funk-Protokolls verpackt. Beispielsweise kann eine größere Anfrage 62a in kleinere Funktelegramme 62b auf der Funkstrecke zerlegt werden. Durch das Zerlegen bzw. Verpacken entstehen zusätzliche Latenzzeiten. Dadurch entsteht eine Verzögerung.

Der Zeitstrahl 66 zeigt das HART®-Anfragepaket, eingepackt in das Funk-Protokoll auf der Funkstrecke 58. Die Funkpakete 62b wandern über die Luftschnittstelle zu dem Empfänger-Funkmodul, von dem sie wieder in HART®-Pakete zurückgewandelt werden.

Der Zeitstrahl 68 zeigt das Anfrage-HART®-Paket 62c, das von dem Empfangsfunkmodul aus den Funkpaketen 62b zurückgewandelt wurde. Das empfangene HART®-Anfragepaket 62c entspricht dem von dem Auswertegerät bzw. HART®-Master ausgesandten Anfragepaket 62a. Durch die Rückwandlung der Funkpakete 62b in das Anfragepaket 62c ist eine zusätzliche Latenzzeit entstanden. Verglichen mit einem sich auf einem Standard-HART®-Bus ausbreitenden Anfragesignal ist durch das Zerlegen, Ein- bzw. Auspacken und Zusammensetzen eine erhöhte Laufzeit entstanden. Das Anfragepaket 62c gelangt an den Sensor. Das Anfragepaket 62c wird von dem Sensor ausgewertet und der Sensor antwortet mit einem Antwortpaket 70a entsprechend der HART®-Spezifikation. Das HART®-Antwortpaket 70a ist ebenfalls auf dem Zeitstrahl 68 dargestellt. Es gelangt zu dem an dem Feldgerät angeschlossenen Funkmodul und wird ebenfalls in zu der Funkübertragung kompatible Funktelegramme 70b umgesetzt und über die Funkschnittstelle übertragen.

Bei der Umsetzung kommt es wiederum zu der Erhöhung der Latenzzeit. Nach der Übertragung über die Luftschnittstelle gelangt das Funktelegramm 70b zu dem masterseitigen Funkmodul und wird von diesem wiederum in das entsprechende HART®-Paket 70c gewandelt. Die HART®-Antwortpakete 70a und 70c sind identisch. Zwischen ihnen ist lediglich ein zeitlicher Unterschied, der aufgrund der Latenzzeiten und Signallaufzeiten entstanden ist.

Aufgrund der zusätzlichen Latenzzeiten durch das Ein- und Auspacken von sowohl dem Anfragepakets 62a und dem Antwortpaket 70a entsteht auf dem Zeitstrahl 64 aus Sicht des Masters ein zeitlicher Abstand zwischen Anfragesignal 62a und 70c. Gemäß der HART®-Spezifikation muss das Antwortsignal eines Slaves auf eine Masteranfrage innerhalb von 256 ms vorliegen. Da sich durch die doppelte Funkstrecke eine zusätzliche Latenzzeit ergibt, kann das Auswertgerät nicht mit einer Antwort innerhalb der, von der Spezifikation geforderten Zeit rechnen. Das Auswertgerät bzw. der HART®-Master muss daher über ein auf die Funktechnologie abgestimmtes Timeout-Verhalten verfügen. Beispielsweise muss der Timer innerhalb dessen das Antwortsignal vorliegen soll, erhöht werden und größer als 256 ms sein. Mittels des Zeitpfeiles 72 ist in Fig. 8 die fortlaufende Zeit dargestellt. Die drei Zeitstrahle 64, 66 und 68 bezeichnen dabei unterschiedliche geografische Lokationen.

Fig. 9 zeigt den Betrieb von zwei Mastern 54a und 54b und einem Slave 52e in Verbindung mit erfindungsgemäßen Funlcmodulen 14a, 14e und 14f bei einer drahtlosen Kommunikation. Es soll zur Vereinfachung im Zusammenhang mit der Beschreibung der Funkreichweite der Begriff der Master 54a und 54b als auch des Slaves 52e gleichbedeutend mit den entsprechend angeschlossenen Funkmodulen 14a, 14e und 14f verwendet werden.

Die HART®-Spezifikation ermöglicht den wechselseitigen Zugriff von zwei Mastern auf den HART®-Bus 6 durch Regeln, die den zeitlichen Zugriff der Master 54a, 54b auf den Bus 6 festlegen. Auf die Antwort einer eigenen Anfrage darf ein Master 54a frühestens nach 75 ms erneut eine Anfrage stellen. Auf eine Antwort einer fremden Anfrage jedoch bereits nach 20 ms bis 75 ms. Somit ist gewährleistet, dass die zwei Master 54a, 54b immer abwechselnd zum Zuge kommen. D.h. durch das Zeitverhalten wird der Buszugriff geregelt.

Bei dem Ersetzen bzw. Auftrennen eines Standard-HART®-Busses mittels der Funkübertragungsmodule 14a, 14e und 14f kann es vorkommen, dass sich die zwei Master 54a, 54b bzw. die entsprechenden Funkmodule 14a und 14f nicht in Funkreichweite befinden. Dieser Sachverhalt ist in Fig. 9 dargestellt. Die Funkreichweite wird, neben anderen Parametern, durch das Dämpfungsverhalten des Mediums, die Frequenz bzw. die Sendeleistung oder Empfindlichkeit in den Funkmodulen 14a, 14e und 14f und die Güte bzw. den Gewinn der Antennen festgelegt. In Fig. 9 sei die Funkreichweite zwischen zwei Funkmodulen als der Radius eines Kreises 76 definiert. D. h. dass ein Funksignal, nachdem es die Distanz 76 durchlaufen hat, nicht mehr wahrnehmbar ist.

In Fig. 9 befindet sich der Slave 52e zusammen mit dem Funkmodul 14e auf dem Mittelpunkt des Kreises mit dem Umfang 74. Auf dem Umfang 74 befinden sich sowohl Funkmodul 14a mit Master 54a und Funkmodul 14f mit Master 54b. Der Slave 52e mit Funkmodul 14e befindet sich genau in der Mitte zwischen den beiden Mastern bzw. ihren Funkmodulen 14a, 54a und 14f, 54b. Der Abstand der beiden Master bzw. ihrer Funkmodule beträgt somit die doppelte Funkreichweite. In diesem Fall hat jeder Master bzw. dessen Funkmodul 14a, 14f Kontakt zum Slave 52e bzw. dessen Funkmodul 14e.

Die zwei Master selbst sind jedoch außerhalb ihrer Funkreichweite. Das bedeutet, dass ein von Funkmodul 14a ausgesandtes Signal nicht genügend Energie aufweist, um das Funkmodul 14f zu erreichen. Die beiden Master bzw. die Funkmodule 14a und 14f sehen sich nicht. Allerdings sehen sie Antwortsignale, die von Slave 52e bzw. Funkmodul 14e ausgesandt werden.

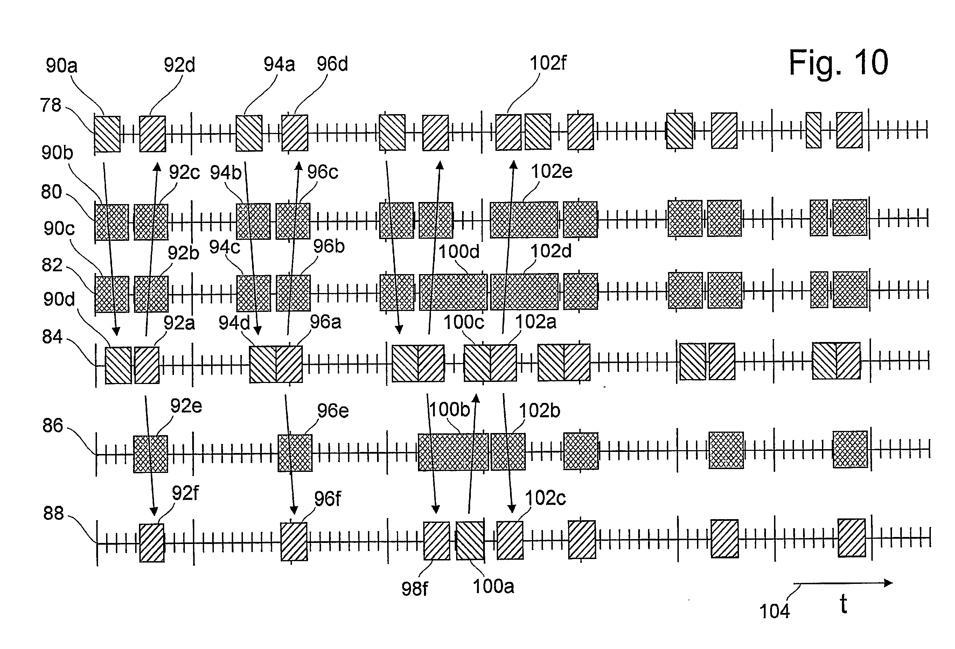

In Fig. 10 ist ein entsprechendes Zeitverhalten dargestellt. In Fig. 10 sind die sechs Zeitstrahle 78, 80, 82, 84, 86 und 88 zu sehen. Durch den Zeitpfeil 104 ist die Richtung fortschreitender Zeit angegeben.

Die Zeitstrahle 78, 80, 82, 84, 86 und 88 entsprechen den örtlichen Positionen der in Fig. 9 dargestellten Komponenten. Zeitstrahl 78 entspricht dem Zeitverhalten bei Master 54a. Zeitstrahl 80 entspricht dem Zeitverhalten am Funkmodul 14a. Zeitstrahl 82 entspricht dem Zeitverhalten am Funkmodul 14e. Zeitstrahl 84 entspricht dem Zeitverhalten am Slave 52e. Zeitstrahl 86 entspricht dem Zeitverhalten am Funkmodul 14f. Zeitstrahl 88 entspricht dem Zeitverhalten am Master 54b.

In der in Fig. 10 dargestellten Konstellation sendet beispielsweise Master 54a eine Anfrage bzw. ein entsprechendes Anfragetelegramm 90a gemäß dem HART®-Standard auf den Bus 6 aus. Dieses Anfragepaket 90a gelangt über den Bus 6 zu dem Funkmodul 14a. Dort wird es in das Funktelegramm 90b gewandelt und über die Funkübertragungsstrecke 58a übertragen. Funkmodul 14e empfängt das so ausgesandte Funlctelegramm 90b als Funktelegramm 90c, wandelt es in das HART®-Anfragetelegramm 90d und liefert es an Slave 52e.

Slave 52e bewertet das empfangene Anfragesignal 90d gemäß dem HART®-Protokoll und liefert ein entsprechendes Antwortsignal bzw. Antworttelegramm 92a. Dieses HART®-Telegramm wird an das Funkmodul 14e weitergegeben. Von Funkmodul 14e wird das Antwortsignal 92a in das Funktelegramm 92b gewandelt. Funkmodul 14e strahlt das Funktelegramm 92b ab. Aufgrund der verwendeten Omni-Charakteristik der Antenne breitet sich das Funktelegramm 92b gemäß der Reichweite, bestimmt durch den Radius 76, in alle Richtungen kreisförmig um das Funkmodul 14e aus.

Das Funktelegramm 92b erreicht als Funktelegramm 92c das Funkmodul 14a und wird von Funkmodul 14a unter Inanspruchnahme einer Ein- bzw. Auspackzeit in das HART®-Antworttelegramm 92d gewandelt und als solches dem Master 54a zur Verfügung gestellt. Aufgrund der Omni-direktionalen Ausbreitung des Funksignals 92b erreicht das Signal 92b als Signaltelegramm 92e das Funkmodul 14f. Dieses wandelt das Funktelegramm 92e in das HART®-Antworttelegramm 92f und leitet es über den angeschlossenen HART®-Bus 6 an den Master 54b weiter.

Der Master 54b erkennt, dass es sich um ein für Master 54a bestimmtes Antwortsignal handelt. Es handelt sich also um ein fremdes Antwortsignal aus Sicht von Master 54b. Master 54b erhält die Antwort bzw. das Antworttelegramm 92f, obwohl die Anfrage 90a bzw. das Anfragesignal 90b für ihn selbst nicht wahrnehmbar war. Das Funkmodul 14f liegt außerhalb der Funkreichweite des Funkmoduls 14a. Nach dem Empfang der fremden Antwort 92f kann Master 54b entsprechend dem HART®-Protokoll in einem Zeitbereich von 20 ms bis 75 ms eine eigene Anfrage starten.

Das Antwortpaket 92d bzw. Antwortsignal 92d ist für Master 54a die Antwort auf eine eigene Anfrage, in diesem Fall auf das Anfragepaket 90a. Nach Empfang des Antwortpakets 92d muss Master 54a eine gewisse Wartezeit warten, bevor er eine erneute Anfrage stellen kann. Durch diese Zwangspause wird gewährleistet, dass das gemeinsame Medium, d. h. der Bus bzw. das Funkübertragungsmedium, von Master 54a und 54b gleichberechtigt genutzt werden kann.

Die Wartezeit nach dem Empfang einer eigenen Antwort wird so gewählt, dass sie größer ist als die Zeit, die die Antwort einer Anfrage von Master 54b bis zur Ausgabe dieser Anfrage an Master 54a benötigen würde. Dabei werden alle Einpack-, Auspack- und sonstigen Latenzzeiten bzw. Signallaufzeiten berücksichtigt. Diese Wartezeit beträgt mehr als 75 ms. Beispielsweise beträgt die Wartezeit zwischen dem Empfang einer Antwort auf eine eigene Anfrage und dem erneuten Aussenden einer Anfrage 94a mehr als 500 ms. Mit einem ausreichend schnellen Funksystem kann sich eine Wartezeit von kleiner 500m erreichen lassen. Nach Warten von 500 ms kann eine erneute Anfrage von Master 54a erfolgen. Das Anfragepaket 94a wird in der vorher beschriebenen Art und Weise versandt und führt zu dem Antwortsignal 96d bzw. 96f.

Falls Master 54b eine Anfrage an den Slave 52e zu richten hat, kann er innerhalb eines Zeitbereichs von 20 ms bis 75 ms nach Empfang eines fremden Antwortsignals eine Anfrage stellen. In Fig. 10 empfängt Master 54b das fremde Antwortsignal 98f. Dies ist das Antwortsignal des Slave 52e auf eine Anfrage des Masters 54a. Innerhalb eines Zeitbereichs von 20 bis 75 ms kann der Master 54b sein dem HART®-Protokoll entsprechendes Anfragesignal 100a an den Slave 52b richten.

Das HART®-Paket 100a wird über den HART®-Bus 6 dem Funkmodul 14f zum Senden zur Verfügung gestellt. Funkmodul 14f verpackt das Anfragetelegramm 100a und sendet das Funkpaket 100b. Als Funkpaket 100d wird dieses von Funkmodul 14e empfangen, ausgepackt und dem Slave 52e als HART®-Anfragepaket 100c zur Verfügung gestellt.

Der Slave 52e wertet die Anfrage 100c aus und erzeugt ein Antwortpaket 102a. Über das Funkmodul 14e wird das Antwortpaket 102a in das Funkpaket 102d verpackt und aufgrund der Omni-Charalcteristilc der Antenne des Funkmoduls 14e in alle Richtungen versandt. Es erreicht als Funkpaket 102b das Funkmodul 14f, das aus dem Funkpaket 102b das HART®-Antwortpaket 102c erzeugt.

Über den HART®-Bus 6 stellt Funkmodul 14f dem Master 54b das Antwortpaket 102c zur Verfügung. Das Antwortpaket 102c ist die Antwort auf die eigene Anfrage 100a des Masters 54b. Als Antwortpaket 102f erreicht die Antwort für Master 54b auch den Master 54a. Dieser erkennt jedoch das Antwortpaket 102f als Antwort auf eine fremde Anfrage.

Durch ein spezielles Timing im Auswertegerät 54 bzw. HART®-Master 54 wird die drahtlose Kommunikation mit HART®-Geräten bzw. Feldgeräten oder HART®-Slaves 52, die nach der vorhandenen HART®-Spezifikation arbeiten, ermöglicht.

Ergänzend ist darauf hinzuweisen, dass "umfassend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkung anzusehen.

## Patentansprüche

1. Steuereinrichtung zur drahtlosen Kommunikation mit einem Feldgerät, umfassend:
eine Feldbusumsetzungseinrichtung (8);
eine Timeout-Anpassungseinrichtung (4);
wobei die Feldbusumsetzungseinrichtung (8) ausgebildet ist, ein Steuersignal in ein Feldbus-Signal entsprechend einem Feldbus-Protokoll umzusetzen;
wobei die Feldbusumsetzungseinrichtung (8) einen Timer aufweist, der zur Überwachung eines Ablaufs einer Wartezeit dient;
wobei die Timeout-Anpassungseinrichtung (4) ausgebildet ist, ein Zeitverhalten des Feldbus-Protokolls an eine Funksignalübertragung durch Zugriff auf den Timer anzupassen, um so ein Zeitverhalten zu berücksichtigen, das sich gegenüber einem Standard durch die Einführung der Funksignalübertragung geändert hat.

2. Steuereinrichtung nach Anspruch 1,
wobei die Feldbusumsetzungseinrichtung (8) ausgebildet ist, ein Feldbus-Signal gemäß einer Spezifikation ausgewählt aus der Gruppe der Spezifikationen HART®, Profibus und Fieldbus Foundation bereitzustellen.

3. Steuereinrichtung nach Anspruch 2,
wobei die Steuereinrichtung (2) als HART®-Master ausgebildet ist.

4. Steuereinrichtung nach einem der Ansprüche 1 bis 3,
wobei die Steuereinrichtung (2) ausgebildet ist, auf eine Antwort auf eine eigene Anfrage frühestens nach 75 ms eine neue Anfrage zu stellen.

5. Steuereinrichtung nach einem der Ansprüche 1 bis 4,
wobei die Steuereinrichtung (2) ausgebildet ist, auf eine fremde Anfrage eine neue Anfrage in einem Bereich von 20 ms bis 75 ms zu stellen.

6. Datenübertragungssystem zur drahtlosen Kommunikation, umfassend:
(i) eine Steuereinrichtung (2) nach einem der Ansprüche 1 bis 5;
(ii) ein Feldgerät (52) mit einer Sende-Empfangseinrichtung, umfassend:
eine Sendeeinrichtung; (22)
eine Empfangseinrichtung (20);
wobei die Sendeeinrichtung (22) ausgebildet ist, ein Feldbus-Protokoll in ein Funk-Protokoll umzusetzen und zu senden;
wobei die Empfangseinrichtung (20) ausgebildet ist, das Funk-Protokoll in das Feldbus-Protokoll umzusetzen und zu empfangen;
(iii) eine Funkübertragungseinrichtung (56);
wobei die Steuereinrichtung (2) ausgebildet ist, mit der Funkübertragungseinrichtung (56) über ein Feldbus-Protokoll zu kommunizieren;
wobei das Feldgerät (52) ausgebildet ist, mit der Funkübertragungseinrichtung (56) über das Feldbus-Protokoll zu kommunizieren;
wobei die Funkübertragungseinrichtung (56) ausgebildet ist, das Feldbus-Protokoll mittels eines Funk-Protokolls zu übertragen.

7. Datenübertragungssystem nach Anspruch 6,
wobei das Feldbus-Protokoll ein Protokoll, ausgewählt aus der Gruppe der Feldbus-Protokolle HART®, Profibus und Fieldbus Foundation ist.

8. Datenübertragungssystem nach Anspruch 7,
wobei ein Timeout-Verhalten des HART®-Protokolls in der Steuereinrichtung (2) an die Funksignalübertragung angepasst ist.

9. Datenübertragungssystem nach einem der Ansprüche 6 bis 8,
wobei das Funk-Protokoll ein Protokoll, ausgewählt aus der Gruppe der Funk-Protokolle WLAN, Bluetooth und Zigbee ist.

10. Datenübertragungssystem nach einem der Ansprüche 6 bis 9,
wobei die Funkübertragungseinrichtung (56) ausgebildet ist, ein Analogsignal an die Steuereinrichtung (2) zu übertragen.

11. Datenübertragungssystem nach Anspruch 6,
wobei das Analogsignal ein 4...20mA-Signal ist.

12. Datenübertragungssystem nach einem der Ansprüche 6 bis 11,
wobei die Funkübertragungseinrichtung (56) ausgebildet ist, ein Schaltsignal an die Steuereinrichtung (2) zu übertragen.

13. Datenübertragungssystem nach einem der Ansprüche 6 bis 12, die Funkübertragungseinrichtung weiter umfassend:
eine Speichereinrichtung (18);
wobei die Speichereinrichtung (18) ausgebildet ist, eine von dem Feldgerät (52) bereitgestellte Information zu speichern; und
wobei die Speichereinrichtung (18) ausgebildet ist, bei Bedarf die gespeicherte Information an die Steuereinrichtung (2) bereitzustellen.

14. Datenübertragungssystem nach einem der Ansprüche 7 bis 13,
wobei die Steuereinrichtung (2) als HART®-Master ausgebildet ist.

15. Datenübertragungssystem nach einem der Ansprüche 7 bis 14,
wobei das Feldgerät (52) als HART@-Slave ausgebildet ist.

16. Datenübertragungssystem nach einem der Ansprüche 6 bis 15,
wobei das Feldgerät (52) als Sensor aus der Gruppe Füllstandssensor, Drucksensor und Grenzstandssensor ausgebildet ist.

17. Datenübertragungssystem nach einem der Ansprüche 6 bis 16,
wobei die Steuereinrichtung (2) ausgebildet ist, auf eine Antwort auf eine eigene Anfrage frühestens nach 75 ms eine neue Anfrage zu stellen.

18. Datenübertragungssystem nach einem der Ansprüche 6 bis 17,
wobei die Steuereinrichtung (2) ausgebildet ist, auf eine fremde Anfrage eine neue Anfrage innerhalb eines Bereichs von 20 ms bis 75 ms zu stellen.

19. Verfahren zur drahtlosen Kommunikation in einem Datenübertragungssystem, das Datenübertragungssystem umfassend:
eine Steuereinrichtung (2);
ein Feldgerät (52);
eine Funkübertragungseinrichtung (56);
wobei das Verfahren die Schritte umfasst:
Anpassen eines Zeitverhaltens eines Feldbus-Protokolls der Steuereinrichtung (2) an eine Funksignalübertragung, indem in der Steuereinrichtung auf einen Timer zugegriffen wird, der zur Überwachung eines Ablaufs einer Wartezeit dient, um so ein Zeitverhalten zu berücksichtigen, das sich gegenüber einem Standard durch die Einführung der Funksignalübertragung geändert hat;
Kommunizieren der Steuereinrichtung (2) mit der Funkübertragungseinrichtung (56) mittels des Feldbus-Protokolls;
Übertragen des Feldbus-Protokolls mittels eines Funk-Protokolls;
Kommunizieren der Funkübertragungseinrichtung mit dem Feldgerät (52) mittels des Feldbus-Protokolls.

20. Verfahren nach Anspruch 19, weiter umfassend den Schritt:
Warten der Steuereinrichtung (2) mit dem Versenden einer neuen Anfrage nach dem Empfang einer Antwort auf eine eigene Anfrage von mindestens 75 ms.

21. Verfahren nach einem der Ansprüche 19 bis 20, weiter umfassend den Schritt:
Versenden einer neuen Anfrage der Steuereinrichtung (2) auf eine fremde Anfrage in einem Bereich von 20 ms bis 75 ms.

## Claims

1. Control device for wireless communication with a field unit, the control device comprising:
a field bus conversion device (8);
a timeout adaptation device (4);
wherein the field bus conversion device (8) is adapted to convert a control signal into a field bus signal according to a field bus protocol;
wherein the field bus conversion device (8) has a timer, which is used for monitoring the expiry of a waiting period;
wherein the timeout adaptation device (4) is adapted to adapt a timing behavior of the field bus protocol to a radio signal transmission by access to the timer in order to take into account a timing behavior by doing so, which has changed in relation to a standard due to the introduction of radio signal transmission.

2. Control device according to claim 1,
wherein the field bus conversion device (8) is adapted to provide a field bus signal according to a specification selected from the group of specifications HART@, Profibus and Fieldbus Foundation.

3. Control device according to claim 2,
wherein the control device (2) is adapted as a HART® master.

4. Control device according to one of claims 1 to 3,
wherein the control device (2) is adapted to make a new request in response to a response to an own request at the earliest after 75 ms.

5. Control device according to one of claims 1 to 4,
wherein the control device (2) is adapted to make a new request in response to an other request within a range from 20 ms to 75 ms.

6. Data transmission system for wireless communication, the data transmission system comprising:
(i) a control device (2) according to one of claims 1 to 5;
(ii) a field unit (52) with a transmission-receiving device, comprising;
a transmitting device (22);
a receiving device (20);
wherein the transmitting device (22) is adapted to convert a field bus protocol into a radio protocol, and to send it;
wherein the receiving device (20) is adapted to convert the radio protocol into the field bus protocol, and to receive it;
(iii) a radio transmission device (56);
wherein the control device (2) is adapted to communicate with the radio transmission device (56) by a field bus protocol;
wherein the field unit (52) is adapted to communicate with the radio transmission device (56) by the field bus protocol;
wherein the radio transmission device (56) is adapted to transmit the field bus protocol by a radio protocol.

7. Data transmission system according to claim 6,
wherein the field bus protocol is a protocol, selected from the group of the field bus protocols consisting of HART®, Profibus and Fieldbus Foundation.

8. Data transmission system according to claim 7,
wherein a timeout behavior of the HART® protocol in the control device (2) is adapted to a radio signal transmission.

9. Data transmission system according to one of claims 6 to 8,
wherein the radio protocol is a protocol, selected from the group of the radio protocols WLAN, Bluetooth and Zigbee.

10. Data transmission system according to one of claims 6 to 9,
wherein the radio transmission device (56) is adapted to transmit an analog signal to the control device (2).

11. Data transmission system according to claim 6,
wherein the analog signal is a 4 ... 20 mA signal.

12. Data transmission system according to one of claims 6 to 11,
wherein the radio transmission device (56) is adapted to transmit a switch signal to the control device (2).

13. Data transmission system according to one of claims 6 to 12, the radio transmission device further comprising:
a memory device (18);
wherein the memory device (18) is adapted to store information provided by the field unit (52); and
wherein the memory device (18) is adapted to provide on demand the control device (2) with the stored information.

14. Data transmission system according to one of claims 7 to 13,
wherein the control device (2) is adapted as a HART@ master.

15. Data transmission system according to one of claims 7 to 14,
wherein the field unit (52) is adapted as a HART@ slave.

16. Data transmission system according to one of claims 6 to 15,
wherein the field unit (52) is adapted as a sensor from the group filling level sensor, pressure sensor and limit sensor.

17. Data transmission system according to one of claims 6 to 16,
wherein the control device (2) is adapted to make a new request in response to a response to an own request at the earliest after 75 ms.

18. Data transmission system according to one of claims 6 to 17,
wherein the control device (2) is adapted to make a new request in response to an other request within a range from 20 ms to 75 ms.

19. Method for wireless communication in a data transmission system, the data transmission system comprising:
a control device (2);
a field unit (52);
a radio transmission device (56);
wherein the method comprises the steps of:
adapting a timing behavior of a field bus protocol of the control device (2) to a radio signal transmission by accessing a timer in the control device, which timer is used for monitoring the expiry of a waiting period in order to take into account a timing behavior by doing so, which has changed in relation to a standard due to the introduction of radio signal transmission;
communicating of the control device (2) with the radio transmission device (56) by the field bus protocol;
transmitting the field bus protocol by a radio protocol;
communicating of the radio transmission device with the field unit (52) by the field bus protocol.

20. Method according to claim 19, further comprising the step of:
deferring the dispatching of a new request by the control device (2) after receiving a response in response to an own request for at least 75 ms.

21. Method according to one of claims 19 to 20, further comprising the step of:
dispatching a new request of the control device (2) in response to an other request within a range from 20 ms to 75 ms.

## Revendications

1. Dispositif de commande pour la communication sans fil avec un appareil de champ, comprenant :
un dispositif de conversion de bus de champ (8) ;
un dispositif d'adaptation Time Out (4) ;
le dispositif de conversion de bus de champ (8) étant réalisé pour convertir un signal de commande en un signal de bus de champ conformément à un protocole de bus de champ ;
le dispositif de conversion de bus de champ (8) présentant une horloge à minuterie, qui sert au contrôle d'un écoulement d'un délai d'attente ;
le dispositif d'adaptation Time Out (4) étant réalisé pour adapter une fonction de transfert du protocole de bus de champ à une transmission de signaux radio par accès à l'horloge à minuterie, pour tenir compte ainsi d'une fonction de transfert qui s'est modifiée par rapport à un standard par l'introduction de la transmission de signaux radio.

2. Dispositif de commande selon la revendication 1,
le dispositif de conversion de bus de champ (8) étant réalisé pour fournir un signal de bus de champ suivant une spécification sélectionnée parmi le groupe des spécifications HART^{®}, Profibus et Fieldbus Foundation.

3. Dispositif de commande selon la revendication 2,
le dispositif de commande (2) étant réalisé sous forme de maître HART^{®}.

4. Dispositif de commande selon l'une des revendications 1 à 3,
le dispositif de commande (2) étant réalisé pour poser une nouvelle demande à une réponse à une demande interne au plus tôt après un délai de 75 ms.

5. Dispositif de commande selon l'une des revendications 1 à 4,
le dispositif de commande (2) étant réalisé pour poser une nouvelle demande à une demande externe dans un délai de 20 ms à 75 ms.

6. Système de transmission de données pour la communication sans fil, comprenant :
(i) un dispositif de commande (2) selon l'une des revendications 1 à 5 ;
(ii) un appareil de champ (52) avec un dispositif d'émission - réception, comprenant :
un dispositif d'émission (22) ;
un dispositif de réception (20) ;
le dispositif d'émission (22) étant réalisé pour convertir un protocole de bus de champ en un protocole radio et pour l'émettre ;
le dispositif de réception (20) étant réalisé pour convertir le protocole radio en le protocole de bus de champ et pour le recevoir ;
(iii) un dispositif de transmission radio (56) ;
le dispositif de commande (2) étant réalisé pour communiquer avec le dispositif de transmission radio (56) à travers un protocole de bus de champ,
l'appareil de champ (52) étant réalisé pour communiquer avec le dispositif de transmission radio (56) à travers le protocole de bus de champ ;
le dispositif de transmission radio (56) étant réalisé pour transmettre le protocole de bus de champ au moyen d'un protocole radio.

7. Système de transmission de données selon la revendication 6,
le protocole de bus de champ étant un protocole, sélectionné parmi le groupe des protocoles de bus de champ HART^{®}, Profibus et Fieldbus.

8. Système de transmission de données selon la revendication 7,
une fonction Time Out du protocole HART^{®} étant adaptée dans le dispositif de commande (2) à la transmission de signaux radio.

9. Système de transmission de données selon l'une des revendications 6 à 8,
le protocole radio étant un protocole, sélectionné parmi le groupe des protocoles radio WLAN, Bluetooth et Zigbee.

10. Système de transmission de données selon l'une des revendications 6 à 9,
le dispositif de transmission radio (56) étant réalisé pour transmettre un signal analogique au dispositif de commande (2).

11. Système de transmission de données selon la revendication 6,
le signal analogique étant un signal 4 ... 20 mA.

12. Système de transmission de données selon l'une des revendications 6 à 11,
le système de transmission radio (56) étant réalisé pour transmettre un signal de connexion au dispositif de commande (2).

13. Système de transmission de données selon l'une des revendications 6 à 12, le dispositif de transmission radio comprenant en outre :
un dispositif de mémorisation (18) ;
le dispositif de mémorisation (18) étant réalisé pour mémoriser une information fournie par l'appareil de champ (52) ; et
le dispositif de mémorisation (18) étant réalisé pour fournir en cas de besoin l'information mémorisée au dispositif de commande (2).

14. Système de transmission de données selon l'une des revendications 7 à 13,
le dispositif de commande (2) étant réalisé sous forme de maître HART^{®}.

15. Système de transmission de données selon l'une des revendications 7 à 14,
l'appareil de champ (52) étant réalisé sous forme d'esclave HART^{®}.

16. Système de transmission de données selon l'une des revendications 6 à 15,
l'appareil de champ (52) étant réalisé sous forme de capteur parmi le groupe de capteur de niveau, de capteur de pression et de capteur d'état limite.

17. Système de transmission de données selon l'une des revendications 6 à 16,
le dispositif de commande (2) étant réalisé pour poser une nouvelle demande à une réponse à une demande interne au plus tôt après un délai de 75 ms.

18. Système de transmission de données selon l'une des revendications 6 à 17,
le dispositif de commande (2) étant réalisé pour poser une nouvelle demande à une demande externe à l'intérieur d'un délai de 20 ms à 75 ms.

19. Procédé de communication sans fil dans un système de transmission de données, le système de transmission de données comprenant :
un dispositif de commande (2) ;
un appareil de champ (52) ;
un dispositif de transmission radio (56) ;
le procédé comprenant les étapes :
adaptation d'une fonction de transfert d'un protocole de bus de champ du dispositif de commande (2) à une transmission de signaux radio, par accès dans le dispositif de commande à une horloge à minuterie qui sert au contrôle d'un écoulement d'un délai d'attente, pour tenir compte ainsi d'une fonction de transfert, qui s'est modifiée par rapport à un standard par l'introduction de la transmission de signaux radio ;
communication du dispositif de commande (2) avec le dispositif de transmission radio (56) au moyen du protocole de bus de champ ;
transmission du protocole de bus de champ au moyen d'un protocole radio ;
communication du dispositif de transmission radio avec l'appareil de champ (52) au moyen du protocole de bus de champ.

20. Procédé selon la revendication 19, comprenant en outre l'étape :
attente du dispositif de commande (2) d'au moins 75 ms avec l'envoi d'une nouvelle demande après la réception d'une réponse à une demande interne.

21. Procédé selon l'une des revendications 19 à 20, comprenant en outre l'étape :
envoi d'une nouvelle demande du dispositif de commande (2) à une demande externe dans un délai de 20 ms à 75 ms.
